# EUROPÄISCHE PATENTSCHRIFT

(11) **EP 2 561 778 B1**
(45) Veröffentlichungstag und Bekanntmachung des Hinweises auf die Patenterteilung: **01.10.2014**
(21) Anmeldenummer: 12179706.2
(22) Anmeldetag: 08.08.2012
(51) Int. Cl.: A47J 31/36

(54) **Kaffeemaschine und Brühgruppe für eine Kaffeemaschine**
Machine à café et groupe de distribution pour une machine à café
Coffee machine and brewing assembly for same

(30) Priorität: 22.08.2011 DE 102011110793
(43) Veröffentlichungstag der Anmeldung: 27.02.2013
(73) Patentinhaber: FRANKE Kaffeemaschinen AG, 4663 Aarburg (CH)
(72) Erfinder:
(74) Vertreter: Lemcke, Brommer & Partner Patentanwälte Partnerschaft mbB

(56) Entgegenhaltungen:
- EP-A1- 0 528 759
- EP-A1- 0 937 432
- EP-A1- 1 535 554
- EP-A1- 2 105 075

## Beschreibung

Die Erfindung betrifft eine Kaffeemaschine gemäß Oberbegriff des Anspruchs 15 und eine Brühgruppe für eine Kaffeemaschine gemäß Oberbegriff des Anspruchs 1.

Kaffeemaschinen zur automatischen Herstellung eines Kaffeegetränks umfassend typischerweise eine Wassererhitzungseinheit, eine Kaffeepulverzuführungseinheit und eine Brühgruppe. Zur Herstellung eines Kaffeegetränks werden Kaffeepulver aus der Kaffeepulverzuführungseinheit sowie erhitztes Wasser aus der Wassererhitzungseinheit der Brühgruppe zugeführt und in dieser findet der Brühvorgang zur Zubereitung des Kaffeegetränks statt.

Typische Brühgruppen weisen einen Brühkopf, ein oberes Verschlusselement, ein unteres Verschlusselement und mindestens ein lineares Führungselement auf. Der Brühkopf umfasst eine zylinderförmige Brühkammer zur Aufnahme des Kaffeepulvers, wobei die Brühkammer durch das obere und untere Verschlusselement verschließbar ist, so dass ein Brühraum zum Aufbrühen des Kaffeegetränks entsteht.

Aus EP 1 774 883 A1 ist eine Brühgruppe bekannt, bei welcher der Brühkopf derart mit dem linearen Führungselement zusammenwirkend ausgestaltet ist, dass der Brühkopf mittels des Führungselementes linear in der Brühgruppe verschiebbar ist. Bei dieser vorbekannten Brühgruppe ist das Führungselement durch zwei motorisch drehbare Spindeln ausgebildet, mittels derer der Brühkopf und das untere Verschlusselement in eine Linearbewegung auf- und abbewegt werden können.

Kaffeemaschinen zur automatischen Erzeugung eines Kaffeegetränkes finden insbesondere im Gastronomiebereich, ebenso auch verstärkt im privaten Bereich Anwendung. Die Brühgruppe stellt hierbei ein mechanisch besonders stark belastetes Element dar, da in der Brühkammer das Kaffeemehl gepresst und unter hohem Druck mit heißem Wasser beaufschlagt wird.

In der vorgenannten EP 1 774 883 A1 wird daher vorgeschlagen, dass der Brühkopf lösbar an den beiden Spindeln festgelegt ist, so dass zur Reinigung, Wartung und zum Austausch der Brühkopf entfernt werden kann.

In der EP 0 937 432 A1 ist eine Kaffeemaschine mit einem lösbar eingesetzten Brühmodul gezeigt, welches einem Brühzylinder sowie einen beweglich im Brühzylinder angeordneten Brühkolben umfasst. Als zweiter Verschluss des Brühzylinders dient ein Verschlusskolben, der am Heißwasserbereiter angeformt und fest mit der Kaffeemaschine verbunden ist.

Die Kopplung des Brühmoduls mit der Kaffeemaschine erfolgt mittels eines nicht näher gezeigten Verschlusses, beispielsweise eines Bajonettverschlusses. Seitlich des Brühmoduls ist ein Antriebsmotor mit einem Antriebsglied in Form einer Schnecke vorgesehen, welches mit einem an dem Brühmodul vorgesehenen Zahnrad in Eingriff steht.

Der vorliegenden Erfindung liegt die Aufgabe zugrunde, eine Kaffeemaschine und eine Brühgruppe der eingangs genannten Art zur Verfügung zu stellen, welche Reinigungs- und Wartungsarbeiten und insbesondere den Austausch von Verschleißteilen vereinfacht und/oder in deren Durchführung in kürzerer Zeitdauer ermöglicht und die Wartungs- und/oder Aufrechterhaltungskosten der Kaffeemaschine senkt.

Gelöst ist diese Aufgabe durch eine Brühgruppe gemäß Anspruch 1 sowie eine Kaffeemaschine gemäß Anspruch 15. Vorteilhafte Ausgestaltungen der Brühgruppe finden sich in den Ansprüchen 2 bis 14. Hiermit wird der Wortlaut sämtlicher Ansprüche explizit per Referenz in die Beschreibung aufgenommen.

Die erfindungsgemäße Brühgruppe ist für eine Kaffeemaschine ausgebildet und umfasst einen Brühkopf, ein oberes Verschlusselement, ein unteres Verschlusselement und mindestens ein lineares Führungselement. Der Brühkopf weist eine zylinderförmige Brühkammer auf, welche durch das obere und das untere Verschlusselement verschließbar ist und der Brühkopf ist derart mit dem linearen Führungselement zusammenwirkend ausgestaltet, dass der Brühkopf mittels des Führungselements linear in der Brühgruppe verschiebbar ist.

Wie aus dem Stand der Technik bekannt, kann mittels der erfindungsgemäßen Brühgruppe nach Zuführen von Kaffeepulver in die Brühkammer und durch lineares Verschieben zumindest des Brühkopfes und Verschließen der Brühkammer mittels des oberen und des unteren Verschlusselementes somit in der Brühkammer durch Zuführen von erhitztem Wasser unter Druck ein Kaffeegetränk aufgebrüht werden. Wesentlich ist, dass die Brühgruppe eine Antriebseinheit und ein Brühmodul aufweist.

Die Antriebseinheit umfasst das lineare Führungselement und einen motorischen Antrieb für das lineare Führungselement. Das Brühmodul umfasst die Brühkammer und zumindest eines der beiden Verschlusselemente, wobei zumindest die Brühkammer linear verschiebbar an der Brühgruppe angeordnet ist.

Das Brühmodul ist lösbar in und/oder an der Antriebseinheit angeordnet, derart, dass bei in und/oder an der Antriebseinheit angeordneten Brühmodul zumindest der Brühkopf mittels des linearen Führungselementes der Antriebseinheit linear verschiebbar ist.

Die Erfindung ist in der Erkenntnis des Anmelders begründet, dass hinsichtlich der Anforderung an Wartung, Reinigung und Austausch von Verschleißelementen eine Brühgruppe in zwei Kategorien unterteilt werden kann:
Die Antriebseinheit umfasst das lineare Führungselement und einen motorischen Antrieb für das lineare Fühfuhgselement. Entsprechend müssen die Elemente der Antriebseinheit stabil ausgebildet sein, um die auftretenden Kräfte bei der linearen Führung und Verschiebung ausüben und aufnehmen zu können. Diese mechanischen Komponenten sind jedoch mit an sich bekannten Komponenten langlebig ausbildbar, so dass sie im Vergleich zu nachfolgend beschriebenen Komponenten keine Verschleißteile darstellen.

Das Brühmodul umfasst den Brühkopf und zumindest eines der beiden Verschlusselemente. Diese Elemente sind der Druckeinwirkung beim Pressen des Kaffeepulvers, beim Aufbrühen durch Beaufschlagung des Kaffeepulvers mit heißem Wasser unter hohem Druck und der Verunreinigung durch Kaffeepulver ausgesetzt und bedürfen somit in regelmäßigen Intervallen der Wartung, Reinigung und häufig des Austauschs aufgrund von Verschleiß.

Durch die lösbare Anordnung des Brühmoduls und/oder an der Antriebseinheit kann der Benutzer oder das Fachpersonal somit in einfacher und zeitsparender Weise das Brühmodul aus der Brühgruppe entnehmen und dieses Reinigen und/oder Warten und/oder gegen ein Ersatzbrühmodul austauschen. Hierdurch ist somit in zeitsparender Weise die Wartung der Kaffeemaschine möglich. Insbesondere der Austausch des Brühmoduls kann bei Unterbrechung des Betriebs der Kaffeemaschine von lediglich wenigen Sekunden durchgeführt werden, so dass die Zeitdauer für Wartung und/oder Reinigung des Brühmoduls einerseits und die Zeitdauer der Unterbrechung des Betriebs der Kaffeemaschine für die Wartung andererseits entkoppelt sind.

Die erfindungsgemäße Brühgruppe ermöglicht somit erstmals eine Wartung der Brühgruppe in kürzestmöglicher Zeitdauer, in dem durch Austausch des Brühmoduls die wartungs- und verschleißrelevanten Teile der Brühgruppe entnehmbar und insbesondere austauschbar sind.

Ein wesentlicher Vorzug des erfindungsgemäßen Brühmoduls ist somit, dass das Brühmodul die typischerweise als Verschleißteile zu betrachtenden Bestandteile der Brühgruppe enthält. Dies umfasst typischerweise eines oder mehrere der folgenden Elemente: Dichtungen des oberen und/oder unteren Verschlusselementes, Dichtungen von Koppeleiementen und/oder ein Kaffe-Sieb am oberen Verschlusselement

Vorzugsweise umfasst das Brühmodul das obere und das untere Verschlusselement. Wie zuvor beschrieben, ist insbesondere aufgrund der Druckbeaufschlagung des Kaffeepulvers in der Brühkammer sind insbesondere die beteiligten Elemente verschleißanfällig. Dies betrifft neben dem Bruhkopf sowohl das obere, als auch das untere Verschlusselement, so dass vorzugsweise beide Verschlusselemente als Teilelemente des Brühmoduls zusammen mit diesem der Brühgruppe entnehmbar sind.

Vorzugsweise ist eines der Verschlusselemente, bevorzugt das obere Verschlusselement, ortsfest an dem Brühmodul angeordnet und das andere Verschlusselement ist zusammen mit dem Brühkopf linear verschiebbar an dem Brühmodul angeordnet.

Hierdurch wird mittels des Antriebs und des linearen Führungselementes der Antriebseinheit Brühkopf und das andere Verschlusselement in Richtung des ortsfest angeordneten Verschlusselementes verschoben, so dass hierdurch ein Verschließen der Brühkammer des Brühkopfes und ein Pressen des Kaffeemehls erzielt wird.

Erfindungsgemäß weist das lineare Führungselement der Antriebseinheit ein erstes mechanisches Koppelelement auf und der Brühkopf des Brühmoduls weist ein zweites mechanisches Koppelelement auf. Die Koppelelement sind derart ausgebildet und angeordnet, dass bei in und/oder an der Antriebseinheit angeordnetem Brühmodul die beiden Koppelelemente mechanisch gekoppelt sind, so dass eine lineare Verschiebungskraft mittels des Führungselementes auf den Brühkopf übertragbar ist. Durch die mechanischen Koppelelemente ist somit in konstruktiv einfacher Weise eine lösbare Verbindung zwischen Antriebseinheit und Brühmodul gewährleistet, welche die Übertragung der linearen Verschiebungskraft von der Antriebseinheit auf zumindest dem Brühkopf und vorzugsweise eines der beiden Verschlusselemente ermöglicht,

Insbesondere ist es vorteilhaft, dass das Koppelelement des Brühmoduls mindestens einen Fortsatz aufweist und das Koppelelement des linearen Führungselementes mindestens eine korrespondierende Aufnahme für den Fortsatz aufweist, so dass in konstruktiv einfacher Ausgestaltung bei Anordnen des Brühmoduls in und/oder an der Antriebseinheit die vorbeschriebene mechanische Kopplung erzielt ist. Hierbei ist es insbesondere vorteilhaft, dass die Aufnahme zum lösbaren Aufnehmen des Fortsatzes ausgebildet ist. Insbesondere liegt die Ausbildung eines Koppelelementes als Aufnahme zum formschlüssigen Aufnehmen des anderen Koppelelementes im Rahmen der Erfindung.

Vorzugsweise ist das Koppelelement des Brühmoduls als stabartiges Element ausgebildet. Insbesondere ist es vorteilhaft, dass das stabartige Element in etwa senkrecht zur linearen Verschiebungsrichtung des Brühkopfes angeordnet ist. Hierdurch ist in konstruktiv einfacher Weise die lineare Verschiebekraft ausgehend von dem motorischen Antrieb über das lineare Führungselement der Antriebseinheit und über das stabartige Element auf den Brühkopf übertragbar.

Vorzugsweise erstreckt sich das Koppelelement des Brühmoduls senkrecht zur linearen Verschiebungsrichtung der Brühkammer zumindest über die Breite der Brühkammer, so dass der Bereich der Brühkammer, welcher mit Druck beim Pressen des Kaffeemehls durch die lineare Verschiebung zu beaufschlagen ist, über die gesamte Breite durch das Koppelelement gestützt ist. Insbesondere ist es vorteilhaft, das Koppelelement des Brühmoduls aus Metall auszubilden, so dass dieses Element des Brühmoduls, welches wesentlich zur Kraftübertragung zwischen Antriebseinheit und Brühkopf ist, aus einem stabilen und dauerhaften Material ausgebildet ist.

Vorzugsweise ist eines der Verschlusselemente, insbesondere bevorzugt das untere Verschlusselement, zusätzlich als Auswurfstößel zum Auswurf verbrauchten Kaffeemehls aus der Brühkämmer ausgebildet und angeordnet. Dieses Verschlusselement erfüllt somit zum einen die Funktion, bei Pressen des Kaffeemehls und Aufbrühen des Kaffees die Brühkammer an einer Seite zu verschließen. Darüber hinaus erfüllt dieses Verschlusselement die Funktion, nach Erzeugen des Kaffeegetränks weiter in die Brühkammer einzudringen und somit an der nun nicht mehr durch das andere Verschlusselement verschlossenen Seite der Brühkammer das verbrauchte Kaffeemehl im Sinne eines Auswurfstößels auszuwerfen.

Insbesondere ist es vorteilhaft, dass in einer Auswurfposition Brühkopf und das als Auswurfstößel ausgebildete Verschlusselement um eine senkrecht zur linearen Verschiebungsrichtung stehende Schwenkachse schwenkbar an dem Brühmodul angeordnet sind. Hierdurch kann somit in konstruktiv einfacher Weise nach Erzeugen des Kaffeegetränks Brühkopf und Auswurfstößel linear in eine Auswurfposition verfahren werden und um vorgenannte Schwenkachse senkrecht zur linearen Verschiebungsrichtung verschwenkt werden, so dass ein Auswurf des Kaffeemehls mittels des als Auswurfstößel ausgebildeten Verschlusselementes bei Verringerung des Risikos einer Verunreinigung der Brühgruppe durch ausgeworfenes Kaffeepulver erfolgt.

Vorzugsweise ist das Brühmodul einstückig lösbar in und/oder an der Antriebseinheit angeordnet. Das Brühmodul stellt somit vorzugsweise insofern eine bauliche Einheit dar, dass es als ein Teil und somit "mit einem Handgriff" aus der Brühgruppe entnehmbar ist.

Vorzugsweise ist das Brühmodul werkzeuglos lösbar in und/oder an der Antriebseinheit angeordnet. Der Benutzer oder das Wartungspersonal kann somit zur Wartung das Brühmodul der Brühgruppe entnehmen, ohne dass Werkzeug, welches in solchen Situationen häufig nicht auffindbar ist und zu Zeitverzögerungen führt, notwendig ist.

Vorzugsweise ist zumindest eines der Elemente Brühkopf, oberes Verschlusselement und/oder unteres Verschlusselement mittels eines Schnellverschlusses an dem Brühmodul angeordnet. Hierdurch kann das entsprechende Element des Brühmoduls nach Entnahme des Brühmoduls aus der Brühgruppe in Kosten sparender Weise entfernt und gewartet und/oder ausgetauscht werden.

In einer weiteren vorteilhaften Ausführungsform weisen oberes und/oder unteres Verschlusselement, vorzugsweise beide Verschlusselemente einen Fluidanschluss umfassend eine Dichtung zum Anschließen einer Fluidleitung auf. In dieser vorteilhaften Ausführungsform sind oberes und/oder unteres Verschlusselement somit zum Ein- und/oder Ausführen eines Fluids, insbesondere von Wasser, über den Fluidanschluss in die Brühkammer ausgebildet.

Untersuchungen des Anmelders haben ergeben, dass die Dichtungen, welche zwischen den Fluidleitungen und den vorbeschriebenen Fluidanschlüssen eine Abdichtung bewirken, ebenfalls häufig Verschleiß unterliegen und/oder gewartet oder gereinigt werden müssen. In dieser vorzugsweisen Ausführungsform werden durch Entnahme des Brühmoduls aus der Brühgruppe somit gleichzeitig auch die wartungsrelevanten Dichtungen entnommen bzw. ausgetauscht bei Austausch des Brühmoduls.

Vorzugsweise weist die Antriebseinheit zwei mittels des motorischen Antriebs drehbare Spindeln auf, welche parallel und zueinander beabstandet an der Antriebseinheit angeordnet sind. Insbesondere ist es vorteilhaft, dass Antriebseinheit und Brühmodul derart ausgebildet sind, dass das Brühmodul lösbar zumindest teilweise zwischen den Spindeln angeordnet ist.

Hierdurch ist in konstruktiv einfacher und besonders robuster Weise eine Kraftübertragung einer linearen Verschiebungskraft durch Drehen der Spindeln mittels des motorischen Antriebs auf die verschiebbaren Elemente des Brühmoduls, insbesondere den Brühkopf realisiert. Vorzugsweise ist an den Spindeln jeweils ein Koppelelement angeordnet und das Brühmodul weist zwei entsprechende Koppelelemente auf, welche bei Anordnen des Brühmoduls in und/oder an der Antriebseinheit mechanisch mit den an den Spindeln angeordneten Aufnahmen gekoppelt sind, zur Übertragung einer linearen Verschiebungskraft. Eine besonders konstruktive einfache Ausgestaltung ergibt sich hierbei, indem das Brühmodul als Koppelelement eine Metallstange aufweist, welche auf zwei gegenüberliegenden Seiten des Brühmoduls mit jeweils einem Ende hervorsteht und die Antriebseinheit entsprechende Aufnahmen an den Spindeln zur formschlüssigen Aufnahme jeweils eines Endes der Stange aufweist.

Vorzugsweise ist das Brühmodul im Wesentlichen aus Kunststoff ausgebildet, hierdurch ist eine gewichtssparende und kostengünstige Ausgestaltung insbesondere der verschleißanfälligen Teile gewährleistet. Insbesondere ist es vorteilhäft, dass oberes und unteres Verschlusselement sowie die Bruhkammer aus Kunststoff ausgebildet sind. Das am Stärksten mechanisch belastete Element des Brühmoduls stellt typischerweise das Koppelelement dar, so dass vorzugsweise das Koppelelement aus einem härteren Material, insbesondere bevorzugt aus Metall ausgebildet ist.

Die eingangs beschriebene, der Erfindung zugrunde liegende Aufgabe ist weiterhin durch eine Kaffeemaschine gelöst, welche eine Wassererhitzungseinheit, eine Kaffeepulverzuführungseinheit und eine Brühgruppe umfasst. Diese Elemente sind derart zusammenwirkend ausgestaltet, dass in der Brühgruppe durch Zuführung von Kaffeepulver mittels der Kaffeepulverzuführungseinheit und erhitztem Wasser mittels der Wassererhitzungseinheit ein Kaffeegetränk herstellbar ist. Dieser Grundaufbau der erfindungsgemäßen Kaffeemaschine entspricht somit dem an sich bekannten Aufbau vorbekannter Kaffeevollautomaten. Wesentlich ist, dass die Brühgruppe gemäß der vorbeschriebenen erfindungsgemäßen Brühgruppe oder einer vorzugsweisen Ausführungsform hiervon ausgebildet ist

Ein wesentlicher Vorteil der erfindungsgemäßen Brühgruppe ist, dass die Antriebseinheit, welche aufgrund der auftretenden Kräfte zwingend robust und stabil ausgebildet werden muss, aufgrund dieser stabilen und robusten Ausbildung im Vergleich zu den sonstigen Komponenten verschleißfrei ist und daher nicht oder nur äußerst selten gewartet oder ausgetauscht werden muss Diejenigen Elemente, die aufgrund des Kontakts mit dem Kaffeemehl und der Druckbeaufschlagung ohnehin Verschleiß unterliegen, können darüber hinaus kostengünstig aus Kunststoffen gefertigt werden und sind in dem entnehmbaren Brühmodul angeordnet, so dass eine Wartung und ein Austausch in sehr kurzer Zeit möglich ist.

Insbesondere bei dem Pressen des Kaffeemehls erfolgt eine Kraftbeaufschlagung des Kaffeemehls innerhalb der Brühkammer des Brühkopfes, wobei durch Aufeinanderzubewegen des oberen und unteren Verschlusselementes das verbleibende Volumen in der Brühkammer verringert und hierdurch das Pressen des Kaffeemehls erfolgt. Die hierbei benötigte Kraft wird über den motorischen Antrieb der Antriebseinheit bereit gestellt, welche über das lineare Führungselement der Antriebseinheit auf das Brühmodul, vorzugsweise auf ein Verschlusselement, insbesondere bevorzugt auf das untere Verschlusselement übertragen wird. Dies erfolgt vorzugsweise mit wie vorbeschrieben ausgestalteten mechanischen Koppelelementen.

Der Gegendruck bei Pressen des Kaffeemehls wird einerseits durch die Mantelfläche der zylinderförmigen Brühkammer aufgefangen und andererseits durch das andere Verschlusselement, vorzugsweise das obere Verschlusselement, welches nicht mittels des motorischen Antriebs der Antriebseinheit über das lineare Führungselement bewegt wird. Vorzugsweise ist die erfindungsgemäße Brühgruppe daher derart ausgebildet, dass sowohl in der Antriebseinheit als auch sowohl an der Antriebseinheit als auch an dem Brühmodul jeweils eine Anlagefläche ausgebildet ist, welche bei in und/oder an der Antriebseinheit angeordnetem Brühmodul aneinander anliegen, zur Aufnahme einer Gegenkraft insbesondere bei Pressen des Kaffeemehls und/oder während des Aufbrühvorgangs.

Diese vorzugsweise Ausführungsform weist somit den Vorteil auf, dass das Brühmodul an sich nicht zwingend die notwendige Stabilität zum Aufbringen der Gegenkraft bei Pressen des Kaffeemehls insbesondere bei Pressen des Kaffeemehls gewährleisten muss. Statt dessen kann die auftretende Kraft ganz oder teilweise über vorgenannte Anlageflächen auf die Antriebseinheit übertragen werden, welche eine entsprechende Stabilität aufweist.

Insbesondere ist es vorteilhaft, dass die Antriebseinheit einen Rahmen und/oder ein Gestell aufweist, welches eine Anlagefläche zur Druck- bzw. Kraftaufnahme über eine korrespondierende Anlagefläche des Brühmoduls umfasst. Insbesondere ist es vorteilhaft, den Rahmen bzw, das Gestell stabil, vorzugsweise aus Metall, auszubilden.

In der vorgenannten vorzugsweisen Ausführungsform, bei der das untere Verschlusselement mittels des linearen Führungselementes bewegt wird ist die Anlagefläche der Antriebseinheit vorzugsweise entsprechend im oberen Bereich der Antriebseinheit und nach unten zeigend angeordnet und korrespondierend vorzugsweise die Anlagefläche des Brühmoduls im oberen Bereich, bevorzugt am oberen Ende des Brühmoduls und nach oben zeigend angeordnet.

In einer weiteren vorzugsweisen Ausführungsform weist das Brühmodul eine Kennzeichnung auf, welche maschinell mittels eines Lesegeräts bei in und/oder an der Antriebseinheit angeordnetem Brühmodul lesbar ist. Diese Kennzeichnung kann beispielsweise als Strichcode, wie an sich bekannt, bei Barcode-Codierungen ausgebildet sein; ebenso liegen andere maschinell lesbare Kennzeichnungen im Rahmen der Erfindung, wie beispielsweise RFID-Kennzeichnungen. In dieser vorzugsweisen Ausführungsform ist somit mittels des Lesegeräts spezifische Information über das jeweils eingesetzte bzw. an der Antriebseinheit angeordnete Brühmodul auslesbar. Hierdurch ergeben sich eine Vielzahl von Vorteilen:
Zum einen kann über die Kennung ein Herstellungsdatum ermittelt werden und gegebenenfalls zur Information des Benutzers über typische Verschleißdauern der verwendeten Teile benutzt werden.

Insbesondere ist es jedoch vorteilhaft, die zur Zubereitung von Kaffee verwendeten Parameter an das jeweilige Brühmodul anzupassen. Vorteilhafterweise wird mindestens einer der Parameter aus der folgenden Gruppe Mahlgrad, Brühdruck, Brühtemperatur, Wasserfördermenge während des Brühvorgangs, Gegendruck bei Pressen des Kaffeemehls abhängig von der Kennzeichnung des Brühmoduls geändert. Hierzu weist die Antriebseinheit und/oder die Kaffeemaschine eine mit der Kennzeichnung korrespondierende Leseeinheit aus, so dass die Kennzeichnung der Brühgruppe mittels der Leseeinheit auslesbar ist und einer Steuereinheit der Kaffeemaschine weitergeleitet werden kann. Die Steuereinheit ist derart ausgebildet, dass abhängig von der Kennzeichnung die Wahl eines oder mehrerer Parameter zur Kaffeezubereitung erfolgt

Hierbei liegt es im Rahmen der Erfindung, dass in der Steuereinheit Tabellen und/oder Listen mit Zuordnungen zwischen Brühmodulkennzeichnungen und entsprechenden Parametern zur Zubereitung des Kaffees gespeichert sind. Ebenso liegt es im Rahmen der Erfindung, dass die Kennzeichnung selbst die Parameterwerte oder äquivalente Information enthält.

In dieser vorteilhaften Ausführungsform kann somit der Brühvorgang für den Kaffee optimal auf die jeweils eingesetzte Brühgruppe angepasst werden. So kann beispielsweise abhängig von der Größe der Brühkammer, Mahleinstellung, Brühdruck und/oder Brühtemperatur angepasst werden. Insbesondere ist es hierbei möglich, Brühmodule für spezielle Getränkearten, beispielsweise Brühmodule, die speziell für Espresso und Brühmodule, die speziell für andere Kaffeearten ausgebildet sind, vorzusehen und mittels entsprechender Kennzeichnungen zu unterscheiden, so dass die Kaffeemaschine durch den Austausch des Brühmoduls in einfacher Weise von einer speziell für die Zubereitung von Espresso optimierten Kaffeemaschine in eine Kaffeemaschine mit einer größeren Variabilität hinsichtlich der produzierten Kaffeegetränkvarianten umgewandelt werden kann.

Weitere vorzugsweise Merkmale und Ausführungsformen der Erfindung werden im Folgenden an einem Ausführungsbeispiel und den Figuren erläutert und beschrieben. Dabei zeigt:
- Figur 1: die Antriebseinheit eines Ausführungsbeispiels einer erfindungsgemäßen Brühgruppe in Frontalansicht;
- Figur 2: die Antriebseinheit des Ausführungsbeispiels der Brühgruppe in Seitenansicht;
- Figur 3: die Antriebseinheit des Ausfühfungsbeispiels in perspektivischer Ansicht schräg von oben;
- Figur 4: ein Brühmodul des Ausführungsbeispiels einer erfindungsgemäßen Brühgruppe in Frontalansicht;
- Figur 5: das Brühmodul in perspektivischer Ansicht;
- Figur 6: das Ausführungsbeispiel einer erfindungsgemäßen Brühgruppe, wobei das Brühmodul in die Antriebseinheit eingesetzt ist in Seitenansicht;
- Figur 7: die Brühgruppe in Rückansicht und
- Figur 8: eine Schnittdarstellung der Brühgruppe gemäß Linie C und senkrecht zur Zeichenebene in Figur 6.

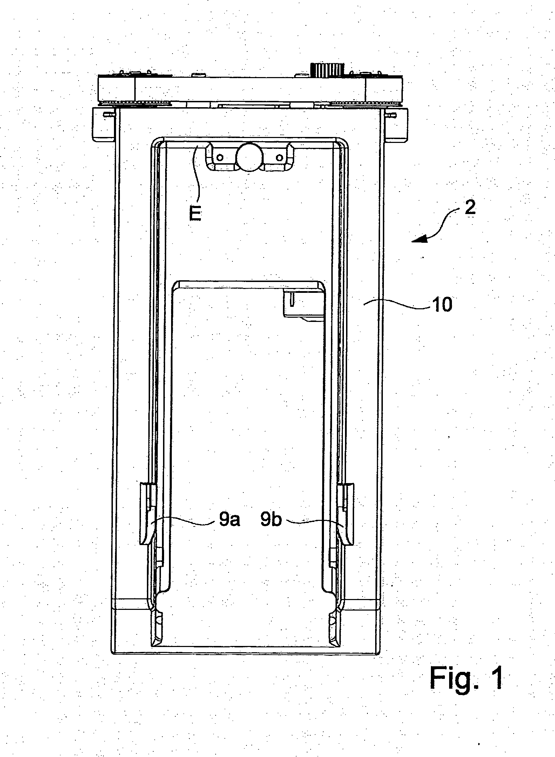

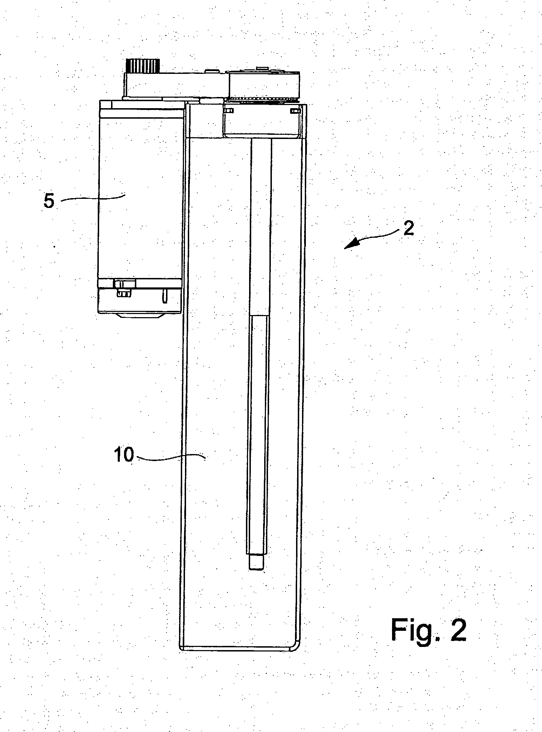

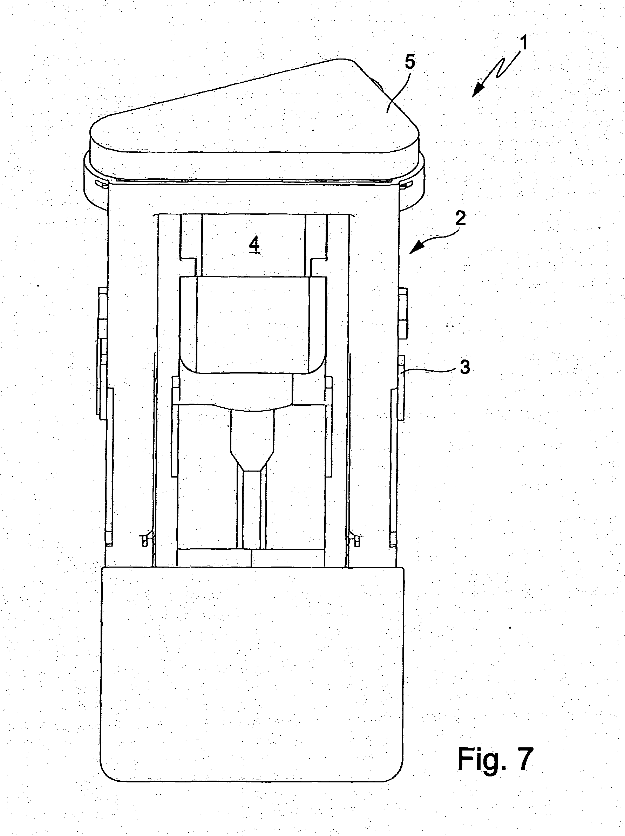

In den Figuren 1 bis 8 bezeichnen gleiche Bezugszeichen gleiche Elemente.

Die Figuren 1 bis 8 beziehen sich auf ein Ausführungsbeispiel einer erfindungsgemäßen Brühgruppe 1 für eine Kaffeemaschine.

Die Brühgruppe weist eine Antriebseinheit 2 und ein Brühmodul 3 auf.

Die Antriebseinheit 2 umfasst ein lineares Führungselement 4, weiches zwei parallel zueinander stehende Spindeln 4a und 4b umfasst. Weiterhin umfasst die Antriebseinheit einen als Elektromotor ausgebildeten motorischen Antrieb 5, welcher über einen Riemen mit den beiden Spindeln 4a und 4b verbunden ist, so dass die Spindeln mittels des Motors gleichsinnig und senkrecht um ihre Achse drehbar sind.

Das Brühmodul 3 umfasst einen Brühkopf 6, welcher eine zylindrische Brühkammer 6a aufweist. Weiterhin umfasst das Brühmodul ein oberes Verschlusselement 7a und ein unteres Verschlusselement 7b.

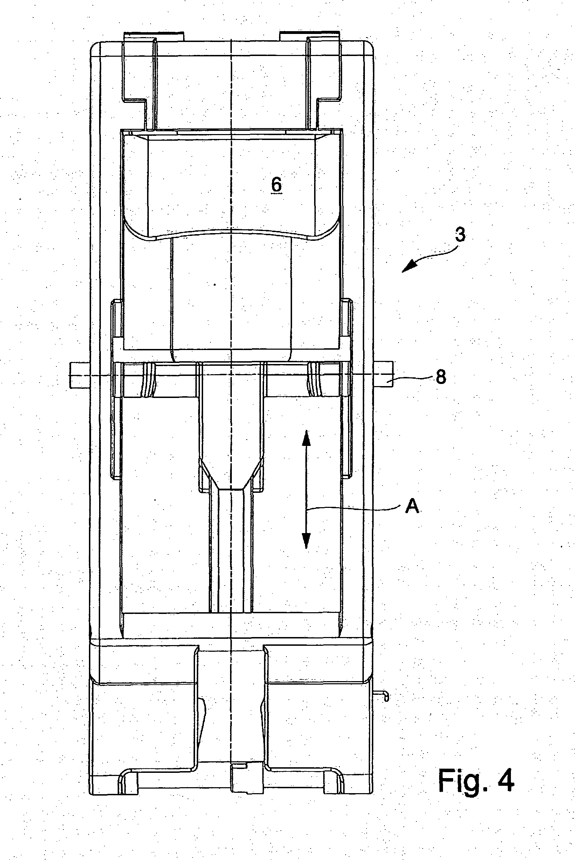

Brühkopf 6 und unteres Verschlusselement 7b sind linear verschiebbar an dem Brühmodul angeordnet, wie beispielsweise in Figur 4 durch den Doppelpfeil A gekennzeichnet. Das obere Verschlusselement 7a ist hingegen ortsfest an dem Brühmodul 3 angeordnet.

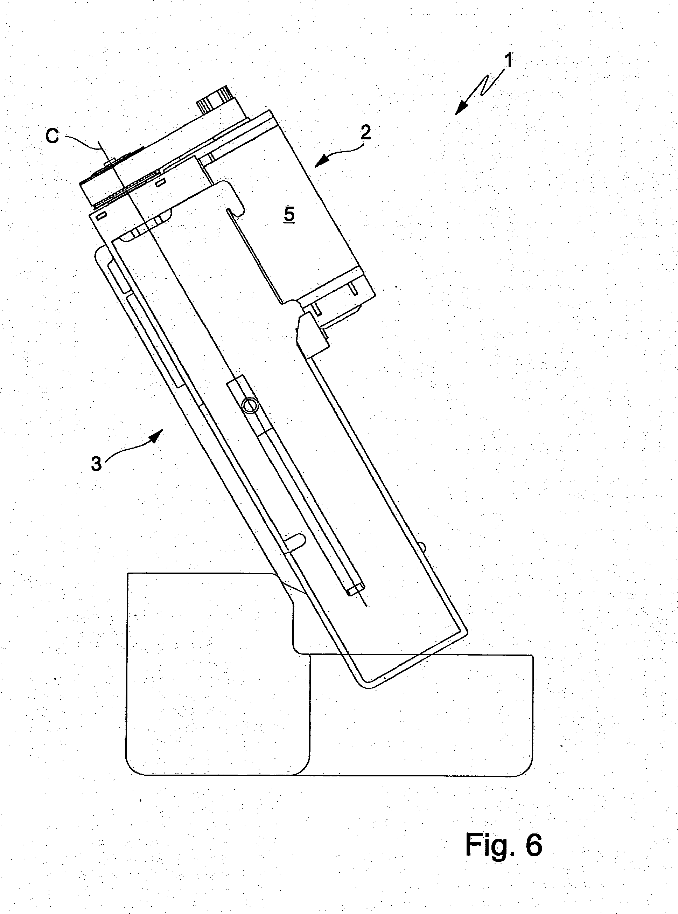

Wesentlich ist, dass das Brühmodul lösbar teilweise in der Antriebseinheit angeordnet werden kann, wie in den Figuren 6 bis 8 dargestellt.

Bei in der Antriebseinheit angeordnetem Brühmodul können Brühkopf 6 und unteres Verschlusselement 7b mittels des motorischen Antriebs 5 auf und abgefahren werden:

Das lineare Führungselement 4 umfasst zwei Spindelmuttern 4c, 4d, welche jeweils kämmend in das Spindelgewinde eingreifen und derart an einem Rahmen der Antriebseinheit 2 geführt sind, dass eine translatorische Bewegung der Spindelmuttern, nicht jedoch eine Drehbewegung um die jeweilige Spindelachse möglich ist.

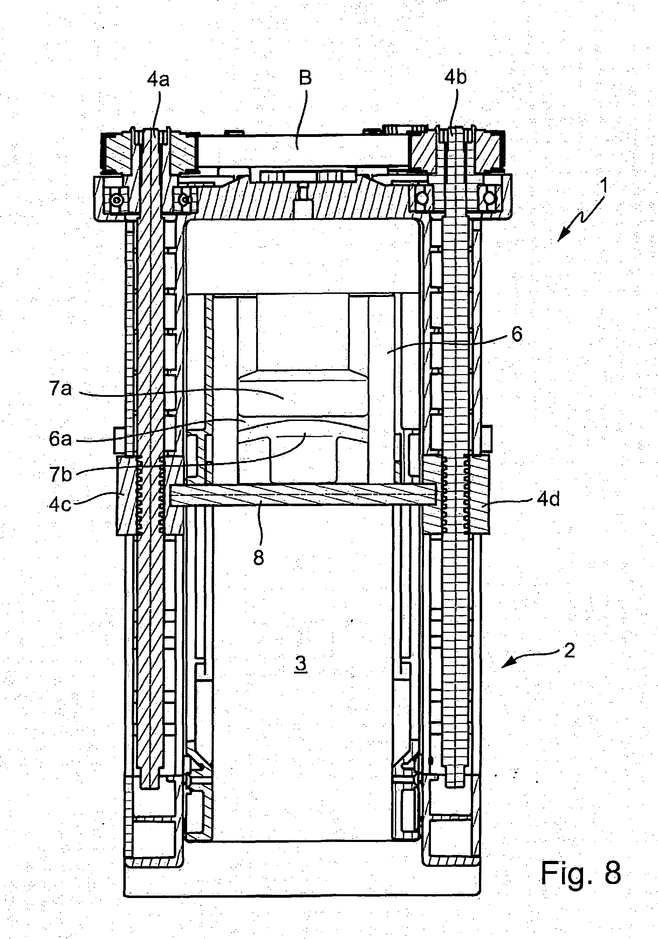

Die Spindelmuttern 4c und 4d weisen an der jeweils innenliegenden Seite Aufnahmen für einen waagrecht verlaufenden Zylinder auf, welcher in der Darstellung in den Figuren 1 und 8 senkrecht zur Zeichenebene und in die Zeichenebene hinein, das heißt von vorne in die Spindelmuttern eingeführt werden kann.

Entsprechend weist das Brühmodul 3 eine Metallstange 8 auf, welche - wie in Figur 4 ersichtlich - rechts und links über einen Rahmen des Brühmoduls 3 übersteht.

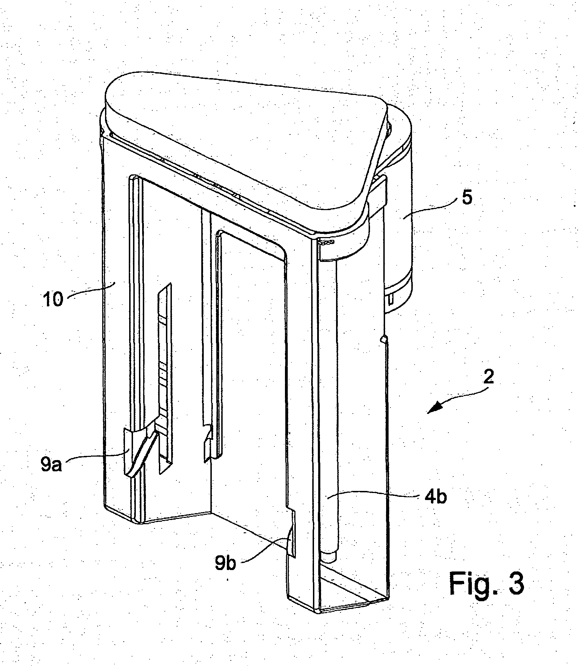

Der Rahmen der Antriebseinheit 2 weist wiederum einen Rahmen für Ausnehmungen 9a und 9b auf (siehe Figuren 1 und 3), so dass bei heruntergefahrenem Brühkopf und unterem Verschlusselement bei Einsetzen des Brühmoduls 3 in die Antriebseinheit 2 die Enden der Metallstange 8 in die korrespondierenden Aufnahmen der Spindelmuttern 4c und 4d eingeführt werden.

Die Metallstange 8 ist unterhalb des unteren Verschlusselementes 7b und des Brühkopfes 6 angeordnet, so dass bei Verfahren der Spindelmuttern 4c und 4d nach oben eine entsprechende lineare Verschiebungskraft nach oben über die Metallstange 8 auf das untere Verschlusselement 7b und dem Brühkopf 6 übertragen wird und beide somit mittels dem motorischen Antrieb 5 nach oben und unten verfahrbar sind.

Zur Herstellung eines Kaffeegetränks werden Brühkopf und unteres Verschlusselement 7b mittels des motorischen Antriebs 5 nach unten gefahren, so dass aufgrund des ortsfest angeordneten oberen Verschlusselementes 7a die Brühkammer 6a oben offen ist und entsprechend Kaffeemehl eingeführt werden kann.

Anschließend werden mittels des motorischen Antriebs 5 Brühkopf 6 und unteres Verschlusselement 7b nach oben verfahren, so dass die Brühkammer durch das obere Verschlusselement 7a verschlossen wird und darüber hinaus das Kaffeemehl zwischen oberem und unterem Verschlusselement gepresst wird.

Oberes und unteres Verschlusselement weisen jeweils eine Fluidleitung auf sowie einen Anschlussstutzen mit einer als O-Ring ausgebildeten Dichtung, welche bei Betrieb mit entsprechenden Fluidleitungen einer Kaffeemaschine verbunden sind, Über eine diese Leitungen wird heißes Wasser in die Brühkämmer 6a zum Aufbrühen von Kaffee eingeführt und über die andere Leitung wird das Kaffeegetränk zu einer Ausgabeöffnung der Kaffeemaschine abgeführt.

Abgesehen von der Metallstange 8 und etwaigen Schrauben oder ähnlichen Verbindungselementen sind die verbleibenden Teile des Brühmoduls 3 aus Kunststoff hergestellt. Hierdurch ist eine Kosten sparende Herstellung des Brühmoduls 3 möglich.

Zwar werden während des Erzeugens von Kaffee, insbesondere während des Pressens des Kaffeemehls erhebliche Kräfte, insbesondere in vertikaler Richtung ausgeübt, diese werden jedoch an die Antriebseinheit 2 weitergeleitet, so dass die wesentliche Stabilität zum Erzeugen bzw. Auffangen dieser Kräfte durch die Antriebseinheit 2 gegeben ist:
Wie in den Figuren 1 bis 3 ersichtlich, weist die Antriebseinheit 2 einen aus Metall ausgebildeten Rahmen 10 auf. An diesem Rahmen ist der motorische Antrieb angeordnet und ebenfalls sind die Spindeln 4a und 4b an dem Rahmen 10 gelagert.

Bei in die Antriebseinheit 2 eingesetztem Brühmodul 3 liegt im oberen Bereich das Brühmodul 3 an der Antriebseinheit 2 an (siehe Bezugszeichen B in Figur 8).

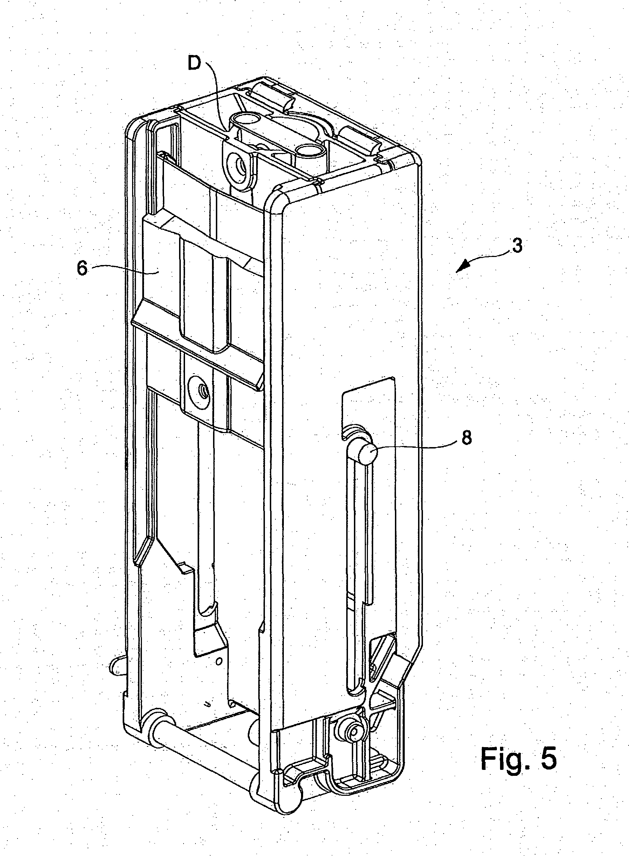

Entsprechend liegen die in der perspektivischen Darstellung des Brühmoduls 3 in Figur 5 ersichtlichen oberen Flächen und Stege (exemplarisch Bezugszeichen D in Figur 5) an einer in Figur 1 mit Bezugszeichen E gekennzeichneten, nach unten zeigenden Auflagefläche des Rahmens 10 der Antriebseinheit 2 an. Bei Pressen des Kaffeemehls wird nun mittels des motorischen Antriebs 5 über die Spindeln 4a und 4b, die Spindelmuttern 4c und 4d, die Metallstange 8 eine in Richtung des oberen Verschlusselementes 7a wirkende Kraft auf das untere Verschlusselement 7b übertragen, wohingegen sich das obere Verschlusselement 7a über entsprechend ausgestaltete Wände und Stege des Brühmoduls 3 an der Auflagefläche E des Rahmens 10 der Antriebseinheit 2 abstützt. Die Wesentliche Stabilität ist somit durch den Rahmen 10, die Spindeln 4a und 4b, die Spindelmuttern 4c und 4d und die Metallstange 8 gegeben.

Wie in Figur 5 ersichtlich, ist das Brühmodul 3 durch ein als Barcode ausgebildete, maschinenlesbare Kennzeichnung 11 gekennzeichnet. Die Antriebseinheit 2 weist, wie in Figur 3 ersichtlich, eine korrespondierendes Lesegerät (12) auf, so dass bei in die Antriebseinheit eingesetztem Brühmodul die Kennzeichnung 11 mittels des Lesegerätes 12 auslesbar ist. Abhängig von den ausgelesenen Daten wird der Gruppe Mahlgrad, Brühdruck, Brühtemperatur, Wasserfördermenge während des Brühvorgangs und Gegendruck bei Pressen des Kaffeemehls gewählt, so dass für die jeweils eingesetzte Brühgruppe optimale Parameter bei der Getränkeherstellung Anwendung finden. Hierbei liegt es im Rahmen der Erfindung, dass zusätzlich für einen oder mehrere Parameter eine Änderung durch den Benutzer oder durch andere Steuerfaktoren erfolgt. insbesondere ist es möglich, dass durch den detektierten Brühgruppentyp für einen oder mehrere Parameter lediglich vorzugsweise Werte und/oder Bereichsgrenzen vorgegeben werden.

## Patentansprüche

1. Brühgruppe für eine Kaffeemaschine,
welche Brühgruppe (1) einen Brühkopf (6), ein oberes Verschlusselement (7a), ein unteres Verschlusselement (7b) und mindestens ein lineares Führun^{g}selement (4) umfasst,
welcher Brühkopf (6) eine zylinderförmige Brühkammer (6a) aufweist, die durch das obere und untere Verschlusselement verschließbar ist und welcher Brühkopf (6) derart mit dem linearen Führungselement (4) zusammenwirkend ausgestaltet ist, dass der Brühkopf (6) mittels des Führungselementes (4) linear in der Brühgruppe (1) verschiebbar ist,
wobei die Brühgruppe (1) eine Antriebseinheit (2) und ein Brühmodul (3) aufweist, weiche Antriebseinheit (2) einen motorischen Antrieb für das lineare Führungselement (4) umfasst und
welches Brühmodul (3) den Brühkopf (6) und zumindest eines der beiden Verschlusselemente umfasst, wobei zumindest die Brühkammer (6a) linear verschiebbar an dem Brühmodul (3) angeordnet ist,
und wobei das Brühmodul (3) lösbar in und/oder an der Antriebseinheit (2) angeordnet ist,
**dadurch gekennzeichnet,**
**dass** die Antriebseinheit (2) das lineare Führungselement (4) umfasst und dass das lineare Führungselement (4) der Antriebseinheit (2) ein erstes mechanisches Koppelelement aufweist und der Brühkopf (6) des Brühmoduls (3) eine zweites mechanisches Koppelelement aufweist, welche Koppelelemente derart ausgebildet und angeordnet sind, dass bei in und/oder an der Antriebseinheit (2) angeordnetem Brühmodul (3) die beiden Koppelelemente mechanisch gekoppelt sind, so dass eine lineare Verschiebungskraft mittels des Führungselementes (4) auf den Brühkopf (6) übertragbar und zumindest der Brühkopf (6) mittels des linearen Führungselementes (4) der Antriebseinheit (2) linear verschiebbar ist.

2. Brühgruppe nach Anspruch 1,
**dadurch gekennzeichnet,**
**dass** das Brahmodul (3) das obere und das untere Verschlusselement (7b) umfasst,
insbesondere,
**dass** eines der Verschlusselemente (7a, 7b), vorzugsweise das obere Verschlusselement (7a), ortsfest an dem Brühmodul (3) angeordnet ist und das andere Verschlusselement (7b) zusammen mit dem Brühkopf (6) linear verschiebbar an dem Brühmodul (3) angeordnet ist.

3. Brühgruppe nach einem der vorangegangenen Ansprüche,
**dadurch gekennzeichnet,**
**dass** das Koppelelement des Brühmoduls (3) mindestens einen Fortsatz aufweist und das Koppelelement des linearen Führungselementes (4) mindestens eine korrespondierende Aufnahme für den Fortsatz aufweist, vorzugsweise, dass die Aufnahme ausgebildet ist zum lösbaren Aufnehmen des Fortsatzes.

4. Brühgruppe nach Anspruch 3,
**dadurch gekennzeichnet,**
**dass** das Koppelelement des Brühmoduls (3) als stabartiges Element ausgebildet ist, vorzugsweise, dass das stabartige Element in etwa senkrecht zur linearen Verschiebungsrichtung des Brühkopfes (6) angeordnet ist.

5. Brühgruppe nach einem der vorangegangenen Ansprüche 3 bis 4,
**dadurch gekennzeichnet,**
**dass** das Koppelelement des Brühmoduls (3) sich senkrecht zur linearen Verschiebungsrichtung der Brühkammer (6a) über zumindest die Breite der Brühkammer (6a) erstreckt.

6. Brühgruppe nach einem der vorangegangenen Ansprüche 3 bis 5,
dass das Koppelelement des Brühmoduls (3) aus Metall ausgebildet ist.

7. Brühgruppe nach einem der vorangegangenen Ansprüche,
**dadurch gekennzeichnet,**
**dass** eines der Verschlusselemente (7a, 7b), vorzugsweise das untere Verschlusselement (7b), zusätzlich als Auswurfstößel zum Auswurf verbrauchten Kaffeemehls aus der Brühkammer (6a) ausgebildet und angeordnet ist,
insbesondere,
**dass** in einer Auswurfposition Brühkopf (6) und das als Auswurfstößel ausgebildete Verschlusselement um eine senkrecht zur linearen Verschiebungsrichtung stehende Schwenkachse schwenkbar an dem Brühmodul (3) angeordnet sind

8. Brühgruppe nach einem der vorangegangenen Ansprüche,
**dadurch gekennzeichnet,**
**dass** das Brühmodul (3) einstückig lösbar in und/oder an der Antriebseinheit (2) angeordnet ist

9. Brühgruppe nach einem der vorangegangenen Ansprüche,
**dadurch gekennzeichnet,**
**dass** das Brühmodul (3) werkzeuglos lösbar in und/oder an der Antriebsenheit (2) angeordnet ist

10. Brühgruppe nach einem der vorangegangenen Ansprüche,
**dadurch gekennzeichnet,**
**dass** zummdest eines der Elemente Brühkopf (6), oberes Verschlusselement (7a) und/oder unteres Verschlusselement (7b) mittels eines Schnellverschlusses an dem Brühmodul (3) angeordnet sind.

11. Brühgruppe nach einem der vorangegangenen Ansprüche,
**dadurch gekennzeichnet,**
**dass** oberes und/oder unteres Verschlusselement (7b), vorzugsweise beide Verschlusselemente, einen Fluidanschluss umfassend eine Dichtung zum Anschließen einer Fluidleitung aufweisen.

12. Brühgruppe nach einem der vorangegangenen Ansprüche,
**dadurch gekennzeichnet,**
**dass** die Antriebseinheit (2) zwei mittels des motorischen Antriebs drehbare Spindeln aufweist, welche parallel und zueinander beabstandet an der Antriebseinheit (2) angeordnet sind, vorzugsweise, dass Antriebseinheit (2) und Brühmodul (3) derart ausgebildet sind, dass das Brühmodul (3) lösbar zumindest teilweise zwischen den Spindeln (4a, 4b) angeordnet ist.

13. Brühgruppe nach einem der vorangegangenen Ansprüche,
**dadurch gekennzeichnet,**
**dass** das Brühmodul (3) im Wesentlichen aus Kunststoff ausgebildet ist, vorzugsweise, dass oberes und unteres Verschlusselement (7b) sowie die Brühkammer (6a) aus Kunststoff ausgebildet sind.

14. Brühgruppe nach einem der vorangegangenen Ansprüche,
**dadurch gekennzeichnet,**
**dass** das Brühmodul eine maschinenlesbare Kennzeichnung (11), vorzugsweise einen Strichcode aufweist, welche durch ein Lesegerät (12) der Antriebseinheit und/oder einer Kaffeemaschine auslesbar ist.

15. Kaffeemaschine,
umfassend eine Wassererhitzungseinheit, eine Kaffeepulverzuführuhgseinheit und eine Brühgruppe (1),
welche derart zusammenwirkend ausgestaltet sind, dass in der Brühgruppe (1) durch Zuführung von Kaffeepulver mittels der Kaffeepulverzuführungseinheit und erhitztem Wasser mittels der Wassererhitzungseinheit ein Kaffeegetränk herstellbar bist,
**dadurch gekennzeichnet,**
**dass** die Brühgruppe (1) gemäß einem der vorangegangenen Ansprüche ausgebildet ist,
vorzugsweise,
**dass** die Brühgruppe zumindest gemäß Anspruch 14 ausgebildet und dass die Kaffeemaschine eine Leseeinheit aufweist, weiche derart angeordnet ist, dass bei in und/oder an der Antriebseinheit angeordnetem Brühmodul die Kennzeichnung des Brühmoduls mittels der Leseeinheit auslesbar ist, insbesondere,
**dass** die Kaffeemaschine eine Steuereinheit umfasst, welche derart zusammenwirkend mit der Leseeinheit ausgebildet ist, dass abhängig von der ausgelesenen Kennung des Brühmoduls mindestens ein Parameter zur Zubereitung von Kaffee gewählt wird, bevorzugt mindestens ein Parameter aus der Gruppe Mahlgrad, Brühdruck, Brühtemperatur, Wasserfortfördermenge während des Brühvorgangs, Gegendruck bei Pressen des Kaffeemehls.

## Claims

1. Brewing assembly for a coffee machine,
which brewing assembly (1) comprises a brewing head (6), an upper closure element (7a), a lower closure element (7b) and at least one linear guide element (4),
which brewing head (6) has a cylindrical brewing chamber (6a) which is closable by the upper and lower closure elements and which brewing head (6) is arranged to co-operate with the linear guide element (4) in such a way that the brewing head (6) is displaceable linearly in the brewing assembly (1) by means of the guide element (4),
wherein the brewing assembly (1) has a drive unit (2) and a brewing module (3), which drive unit (2) comprises a motor drive for the linear guide element (4) and
which brewing module (3) comprises the brewing head (6) and at least one of the two closure elements, at least the brewing chamber (6a) being arranged so as to be linearly displaceable on the brewing module (3),
and wherein the brewing module (3) is detachably arranged in and/or on the drive unit (2),
**characterised in that**
the drive unit (2) comprises the linear guide element (4), and
that the linear guide element (4) of the drive unit (2) has a first mechanical coupling element, and the brewing head (6) of the brewing module (3) has a second mechanical coupling element, which coupling elements are constructed and arranged in such a way that when the brewing module (3) is arranged in and/or on the drive unit (2) the two coupling elements are mechanically coupled so that a linear displacement force is transmissible to the brewing head (6) by means of the guide element (4) and at least the brewing head (6) is linearly displaceable by means of the linear guide element (4) of the drive unit (2).

2. Brewing assembly according to claim 1,
**characterised in that**
the brewing module (3) comprises the upper and the lower closure element (7b),
especially
that one of the closure elements (7a, 7b), preferably the upper closure element (7a), is arranged in fixed position on the brewing module (3), and the other closure element (7b) is arranged on the brewing module (3) so as to be linearly displaceable together with the brewing head (6).

3. Brewing assembly according to either one of the preceding claims,
**characterised in that**
the coupling element of the brewing module (3) has at least one extension, and the coupling element of the linear guide element (4) has at least one complementary seat for the extension, preferably that the seat is constructed for detachably seating the extension.

4. Brewing assembly according to claim 3,
**characterised in that**
the coupling element of the brewing module (3) is in the form of a rod-like element, preferably that the rod-like element is arranged approximately perpendicularly to the direction of linear displacement of the brewing head (6).

5. Brewing assembly according to either one of the preceding claims 3 and 4,
**characterised in that**
the coupling element of the brewing module (3) extends perpendicularly to the direction of linear displacement of the brewing chamber (6a) across at least the width of the brewing chamber (6a).

6. Brewing assembly according to any one of the preceding claims 3 to 5,
**characterised in that**
the coupling element of the brewing module (3) is made from metal.

7. Brewing assembly according to any one of the preceding claims,
**characterised in that**
one of the closure elements (7a, 7b), preferably the lower closure element (7b), is constructed and arranged additionally as an ejector plunger for ejection of spent coffee grounds from the brewing chamber (6a),
especially
that, in an ejection position, the brewing head (6) and the closure element, constructed as an ejector plunger, are arranged on the brewing module (3) so as to be pivotable about a pivot axis perpendicular to the direction of linear displacement.

8. Brewing assembly according to any one of the preceding claims,
**characterised in that**
the brewing module (3) is arranged in and/or on the drive unit (2) so as to be detachable in one piece.

9. Brewing assembly according to any one of the preceding claims,
**characterised in that**
the brewing module (3) is arranged in and/or on the drive unit (2) so to be detachable without the use of tools.

10. Brewing assembly according to any one of the preceding claims,
**characterised in that**
at least one of the elements brewing head (6), upper closure element (7a) and/or lower closure element (7b) is arranged on the brewing module (3) by means of a quick-release closure.

11. Brewing assembly according to any one of the preceding claims,
**characterised in that**
the upper and/or lower closure element (7b), preferably both closure elements, have a fluid connection comprising a seal for connection of a fluid line.

12. Brewing assembly according to any one of the preceding claims,
**characterised in that**
the drive unit (2) has two spindles which are rotatable by means of the motor drive and which are arranged in parallel and spaced apart from one another on the drive unit (2), preferably that the drive unit (2) and the brewing module (3) are constructed in such a way that the brewing module (3) is detachably arranged at least partly between the spindles (4a, 4b).

13. Brewing assembly according to any one of the preceding claims,
**characterised in that**
the brewing module (3) is made substantially of plastics, preferably that the upper and the lower closure element (7b) and the brewing chamber (6a) are made of plastics.

14. Brewing assembly according to any one of the preceding claims,
**characterised in that**
the brewing module has a machine-readable identification marking (11), preferably a barcode, which is readable by a reading device (12) of the drive unit and/or of a coffee machine.

15. Coffee machine,
comprising a water-heating unit, a coffee powder supply unit and a brewing assembly (1),
which are arranged to co-operate in such a way that a coffee drink can be produced in the brewing assembly (1) by supplying coffee powder by means of the coffee powder supply unit and heated water by means of the water-heating unit,
**characterised in that**
the brewing assembly (1) is constructed in accordance with any one of the preceding claims,
preferably
that the brewing assembly is constructed at least in accordance with claim 14, and
that the coffee machine has a reading unit which is arranged in such a way that when the brewing module is arranged in and/or on the drive unit the identification marking of the brewing module is readable by means of the reading unit,
especially
that the coffee machine comprises a control unit which is arranged to co-operate with the reading unit in such a way that, depending upon the brewing module identifier that is read out, at least one parameter for preparing coffee is selected, preferably at least one parameter from the group: degree of grinding, brewing pressure, brewing temperature, amount of water supplied during the brewing operation, counter-pressure during compression of the coffee grounds.

## Revendications

1. Groupe de distribution destiné à une machine à café,
lequel groupe de distribution (1) inclut une tête de brassage (6), un élément obturateur (7a) supérieur, un élément obturateur (7b) inférieur, et au moins un élément (4) de guidage linéaire,
laquelle tête de brassage (6) comporte une chambre cylindrique de brassage (6a) pouvant être confinée par lesdits éléments obturateurs supérieur et inférieur, et
laquelle tête de brassage (6) est conçue pour coopérer avec ledit élément (4) de guidage linéaire, de façon telle que ladite tête de brassage (6) puisse effectuer des coulissements linéaires dans le groupe de distribution (1), au moyen dudit élément de guidage (4),
ledit groupe de distribution (1) présentant une unité d'entraînement (2) et un module de brassage (3), laquelle unité d'entraînement (2) comprend un entraînement motorisé dédié à l'élément (4) de guidage linéaire, et
lequel module de brassage (3) inclut la tête de brassage (6) et au moins l'un des deux éléments obturateurs, sachant qu'au moins la chambre de brassage (6a) est implantée sur ledit module de brassage (3) avec faculté de coulissement linéaire,
et sachant que ledit module de brassage (3) est implanté, de manière libérable, dans et/ou sur ladite unité d'entraînement (2),
**caractérisé par le fait**
**que** l'unité d'entraînement (2) inclut l'élément (4) de guidage linéaire ; et
par le fait que l'élément (4) de guidage linéaire de l'unité d'entraînement (2) présente un premier élément de couplage mécanique, et la tête de brassage (6) du module de brassage (3) présente un second élément de couplage mécanique, lesquels éléments de couplage sont réalisés et agencés de telle sorte que les deux éléments de couplage soient couplés mécaniquement lorsque ledit module de brassage (3) est implanté dans et/ou sur ladite unité d'entraînement (2), si bien qu'une force de coulissement linéaire peut être répercutée sur la tête de brassage (6) au moyen de l'élément de guidage (4), et qu'au moins ladite tête de brassage (6) peut être animée de coulissements linéaires au moyen dudit élément (4) de guidage linéaire de ladite unité d'entraînement (2).

2. Groupe de distribution selon la revendication 1,
**caractérisé par le fait**
**que** le module de brassage (3) inclut les éléments obturateurs supérieur et inférieur (7b) ;
notamment
par le fait que l'un desdits éléments obturateurs (7a, 7b), de préférence l'élément obturateur (7a) supérieur, occupe une position fixe sur ledit module de brassage (3), et l'autre élément obturateur (7b) est implanté à coulissement linéaire sur ledit module de brassage (3) conjointement à la tête de brassage (6).

3. Groupe de distribution selon l'uné des revendications précédentes,
**caractérisé par le fait**
**que** l'élément de couplage du module de brassage (3) est doté d'au moins un appendice, et l'élément de couplage de l'élément (4) de guidage linéaire est pourvu d'au moins un logement concordant, dévolu audit appendice ; de préférence par le fait que ledit logement est réalisé pour recevoir ledit appendice de manière libérable.

4. Groupe de distribution selon la revendication 3,
**caractérisé par le fait**
**que** l'élément de couplage du module de brassage (3) est réalisé sous la forme d'un élément de type barrette ; de préférence par le fait que ledit élément de type barrette est disposé à peu près perpendiculairement à la direction de coulissement linéaire de la tête de brassage (6).

5. Groupe de distribution selon l'une des revendications 3 à 4 précédentes,
**caractérisé par le fait**
**que** l'élément de couplage du module de brassage (3) s'étend perpendiculairement à la direction de coulissement linéaire de la chambre de brassage (6a), au moins sur la largeur de ladite chambre de brassage (6a).

6. Groupe de distribution selon l'une des revendications 3 à 5 précédentes,
**caractérisé par le fait**
**que** l'élément de couplage du module de brassage (3) est réalisé en métal.

7. Groupe de distribution selon l'une des revendications précédentes,
**caractérisé par le fait**
**que** l'un des éléments obturateurs (7a, 7b), de préférence l'élément obturateur (7b) inférieur, est additionnellement réalisé et agencé comme un coulisseau éjecteur conçu pour expulser de la mouture de café utilisée, hors de la chambre de brassage (6a) ; notamment
par le fait que la tête de brassage (6) et ledit élément obturateur réalisé comme un coulisseau éjecteur sont implantés sur le module de brassage (3), en un emplacement d'expulsion, avec faculté de pivotement autour d'un axe vertical de pivotement perpendiculaire à la direction du coulissement linéaire.

8. Groupe de distribution selon l'une des revendications précédentes,
**caractérisé par le fait**
**que** le module de brassage (3) est implanté amoviblement, d'un seul tenant, dans et/ou sur l'unité d'entraînement (2).

9. Groupe de distribution selon l'une des revendications précédentes,
**caractérisé par le fait**
**que** le module de brassage (3) est implanté, dans et/ou sur l'unité d'entraînement (2), de manière libérable sans le concours d'aucun outil.

10. Groupe de distribution selon l'une des revendications précédentes,
**caractérisé par le fait**
**qu'**au moins l'un des éléments comprenant la tête de brassage (6), l'élément obturateur (7a) supérieur, et/ou l'élément obturateur (7b) inférieur, est implanté sur le module de brassage (3) au moyen d'une fermeture rapide.

11. Groupe de distribution selon l'une des revendications précédentes,
**caractérisé par le fait**
**que** les éléments obturateurs supérieur ét/ou inférieur (7b), de préférence les deux éléments obturateurs, présente(nt) un raccord à fluide incluant une garniture d'étanchement, en vue du raccordement d'un conduit à fluide.

12. Groupe de distribution selon l'une des revendications précédentes,
**caractérisé par le fait**
**que** l'unité d'entraînement (2) comporte deux broches pouvant être animées de rotations au moyen de l'entraînement motorisé, implantées sur ladite unité d'entraînement (2) parallèlement et à distance l'une de l'autre ; de préférence par le fait que ladite unité d'entraînement (2) et le module de brassage (3) sont réalisés de façon telle que ledit module de brassage (3) soit interposé au moins en partie entre lesdites broches (4a, 4b), de manière libérable.

13. Groupe de distribution selon l'une des revendications précédentes,
**caractérisé par le fait**
**que** le module de brassage (3) est, pour l'essentiel, réalisé en matière plastique ; de préférence par le fait que les éléments obturateurs supérieur et inférieur (7b), ainsi que la chambre de brassage (6a), sont réalisés en matière plastique.

14. Groupe de distribution selon l'une des revendications précédentes,
**caractérisé par le fait**
**que** le module de brassage comporte un marquage (11) lisible à la machine, de préférence un code à barres pouvant être lu par un appareil de lecture (12) de l'unité d'entraînement et/ou d'une machine à café.

15. Machine à café
comprenant une unité de chauffage d'eau, une unité de délivrance de mouture de café et un groupe de distribution (1)
qui sont conçus pour coopérer de telle sorte qu'une boisson à base de café puisse être élaborée, dans ledit groupe de distribution (1), par amenée de mouture de café au moyen de ladite unité de délivrance de mouture de café, et d'eau chauffée au moyen de ladite unité de chauffage d'eau,
**caractérisée par le fait**
**que** le groupe de distribution (1) est réalisé conformément à l'une des revendications précédentes ;
de préférence
par le fait que ledit groupe de distribution est réalisé au moins conformément à la revendication 14 ; et
par le fait que la machine à café comporte une unité de lecture agencée de façon telle que, lorsque le module de brassage est implanté dans et/ou sur l'unité d'entraînement, l'identification dudit module de brassage puisse être lue au moyen de ladite unité de lecture ;
notamment
par le fait que ladite machine à café comporte une unité de commande conçue pour coopérer avec ladite unité de lecture de manière à gouverner la sélection, en fonction de l'identification lue sur ledit module de brassage, d'au moins un paramètre relatif à la préparation de café, préférentiellement d'au moins un paramètre extrait du groupe degré de mouture, pression de brassage, température de brassage, quantité d'eau à acheminement continu au cours du processus de brassage, contre-pression lors du compactage de la mouture de café.
